Europäisches Patentamt

European Patent Office

Office européen des brevets

(19)

(11) Veröffentlichungsnummer : **0 436 808 B1**

(12)
# EUROPÄISCHE PATENTSCHRIFT

(45) Veröffentlichungstag der Patentschrift :
**15.02.95 Patentblatt 95/07**

(51) Int. Cl.⁶ : **G06G 7/14,** H04B 3/03,
H04M 1/58, H04Q 3/00

(21) Anmeldenummer : **90122047.5**

(22) Anmeldetag : **17.11.90**

(54) **Summierverstärker mit einem komplexen Gewichtungsfaktor und Schnittstelle mit einem solchen Summierverstärker.**

(30) Priorität : **23.12.89 DE 3942757**

(43) Veröffentlichungstag der Anmeldung :
**17.07.91 Patentblatt 91/29**

(45) Bekanntmachung des Hinweises auf die
Patenterteilung :
**15.02.95 Patentblatt 95/07**

(84) Benannte Vertragsstaaten :
**AT BE CH DE ES FR GB IT LI NL SE**

(56) Entgegenhaltungen :
**DD-A- 224 703**
**DE-A- 3 343 707**
**DE-A- 3 428 106**
**DE-C- 2 914 945**

(56) Entgegenhaltungen :
**IBM TECHNICAL DISCLOSURE BULLETIN,
Band 24, Nr. 11B, April 1982 W.C. DeVITO "Non
inverting summing amplifier" Seiten
5961,5962**

(73) Patentinhaber : **Alcatel SEL
Aktiengesellschaft
Lorenzstrasse 10
D-70435 Stuttgart (DE)**

(72) Erfinder : **Zanzig, Hans-Jürgen
Blammerbergstrasse 39
W-7252 Weil der Stadt (DE)**

(74) Vertreter : **Brose, Gerhard et al
Alcatel SEL AG
Patent- und Lizenzwesen
Postfach 30 09 29
D-70449 Stuttgart (DE)**

## Beschreibung

Die Erfindung betrifft einen Summierverstärker mit einem komplexen Gewichtungsfaktor und eine Zweidraht-Vierdraht-Schnittstelle mit einem solchen Summierverstärker.

Zweidraht-Vierdraht-Schnittstellen oder auch Gabelschaltungen sind in der Fernsprech- und Übertragungstechnik seit langem bekannt. Gabelschaltungen sind Dreitore mit der Aufgabe, einen Empfänger (z.B. die Hörkapsel eines Fernsprechgeräts) von einem Sender (z.B. die Sprechkapsel eines Fernsprechgeräts) zu entkoppeln und dennoch beide mit einer Zweidrahtleitung zu koppeln. Um dies zu erreichen, ist zusätzlich noch eine Leitungs-Nachbildung erforderlich. Vergl. hierzu z.B. K. Steinbuch, W. Rupprecht, Nachrichtentechnik, Springer-Verlag Berlin u.a. 1973, S.235-241. Die Deutsche Bundespost fordert derzeit die Nachbildung einer Leitung, deren Impedanz als Reihenschaltung eines Widerstands zu 220 Ohm mit der Parallelschaltung aus einem Widerstand zu 820 Ohm und einer Kapazität zu 115 nF ausgebildet ist.

Andere Postverwaltungen geben die gleiche Anordung mit ähnlichen Werten vor.

Gerade bei denjenigen Einrichtungen, die für jeden einzelnen Teilnehmer vorhanden sein müssen, ist eine Aufwands- und Kostenreduzierung dringendst erforderlich. Deshalb werden diese Einrichtungen, zu denen auch die Zweidraht-Vierdraht-Schnittstellen mit den darin enthaltenen Nachbildungen gehören, möglichst als integrierte Schaltungen ausgeführt. Besonders störend sind dabei die Kapazitäten. Eine Mindestforderung ist nun die, daß anstelle eines vorgegebenen Kapazitätswerts ein beliebiger anderer verwendet werden kann und daß trotzdem die geforderte Eigenschaft erreicht wird. Eine Zweidraht-Vierdraht-Schnittstelle hat verschiedene Forderungen gleichzeitig zu erfüllen. Bei vielen bekannten Ausführungen sind deshalb oft mehrere Impedanzen mit kapazitivem Anteil enthalten, die in einem vorgegebenen Verhältnis zueinander stehen müssen. Die Toleranzen der Bauelemente müssen dann sehr eng gewählt werden, weil oft Abweichungen des Absolutwertes weniger ausmachen als Abweichungen untereinander. Das Ziel ist deshalb, mit möglichst wenig Impedanzen, möglichst nur mit einer Impedanz, auszukommen.

Zweidraht-Vierdraht-Schnittstellen enthalten je nach Aufbau ein oder zwei Rückkoppelschleifen. Bedingt durch den komplexen Widerstand der Zweidrahtleitung treten auch Phasenlagen auf, die von 0 Grad und 180 Grad verschieden sind. Dies ist gleichbedeutend mit der Summation von Spannungen mit komplexem Gewichtungsfaktor.

Bekanntermaßen ergibt sich die Ausgangsspannung eines Summierverstärkers mit rückgekoppeltem Operationsverstärker aus der auf dessen invertierenden Eingang angewandten Knotenpunktsregel zu

$$Ua = R\,(U1/R1 \ + \ U2/R2 \ + \ ....),$$

wobei

R der Rückkopplungswiderstand,

U1, U2, ... die zu summierenden Spannungen und

R1, R2, ... die Vorwiderstände sind,

über die diese Spannungen am invertierenden Eingang anliegen.

Wie leicht zu erkennen ist, wirkt sich nur der allen Gewichtungsfaktoren gemeinsame Rückkopplungswiderstand R direkt proportional aus. Die Vorwiderstände, die sich individuell auswirken, wirken umgekehrt proportional.

Dies ist in der Regel solange ohne Bedeutung, solange die Gewichtungsfaktoren reell und damit alle Widerstände rein ohmisch sind. Sind die Gewichtungsfaktoren dagegen komplex, so wird diese Einschränkung meist unerwünscht sein. Dies gilt ganz besonders dann, wenn der Gewichtungsfaktor, wie dies bei den genannten Schnittstellen der Fall ist, gleich einem reellen Vielfachen einer vorgegebenen komplexen Impedanz sein soll.

Der Erfindung liegt die Aufgabe zugrunde, einen Summierverstärker anzugeben, mit dem auf einfache Weise komplexe Gewichtungsfaktoren erzielt werden können und der deshalb für Zweidraht-Vierdraht-Schnittstellen besonders geeignet ist.

Die Aufgabe wird gelöst durch einen Summierverstärker nach der Lehre des Hauptanspruchs. Dies führt zu einer Zweidraht-Vierdraht-Schnittstelle nach der Lehre des Anspruchs 2. Weitere Ausgestaltungen der Erfindung sind den Unteransprüchen zu entnehmen.

Auch aus DD-A1-224 703 ist ein Summierverstärker bekannt, bei dem einem Teil der Vorwiderstände jeweils ein weiterer Operationsverstärker vorgeschaltet ist. Diese Operationsverstärker sind als Elektrometerverstärker beschaltet und dienen als Trennverstärker der Impedanzwandlung. Eine Verstärkungseinstellung ist zwar auch beim Elektrometerverstärker möglich, allerdings ohne eine direkte Proportionalität zwischen Verstärkungsfaktor und irgendeinem Widerstandswert. Dies ist nur bei der hier verwendeten Beschaltung als Umkehrverstärker möglich.

Umkehrverstärker, auch invertierende Verstärker genannt, sind allgemein ebenso bekannt wie Elektrometerverstärker, die auch nicht-invertierende Verstärker genannt werden. Beide Beschaltungsarten bilden die Grundlage für vielfältige Anwendungen. Nur beispielhaft wird auf das Standardwerk "Halbleiter-Schaltungstechnik" von U.Tietze und Ch. Schenk verwiesen. In der achten Auflage von 1986 werden in den Kapiteln 7.3 und 7.4, Seiten 132 - 137, die Grundschaltungen beschrieben und im Teil II verschiedene Anwendungen, darunter Addierer und Subtrahierer in den Kapiteln 12.1 und 12.2, Seiten 299-304. In den nachfolgenden Beispielen sind bis auf den Operationsverstärker im Steuersignalempfänger SSE alle Operationsverstärker als Umkehrverstärker beschaltet.

Im folgenden wird die Erfindung unter Zuhilfenahme der beiliegenden Zeichnungen weiter erläutert.

Fig. 1 zeigt eine erfindungsgemäße Summierschaltung.

Fig. 2 zeigt ein Ausführungsbeispiel einer erfindungsgemäßen Schnittstelle mit einer darin enthaltenen erfindungsgemäßen Summierschaltung.

Fig. 3 zeigt den Aufbau der nachzubildenden Impedanz.

Fig. 4 zeigt einen bevorzugten Anwendungsfall.

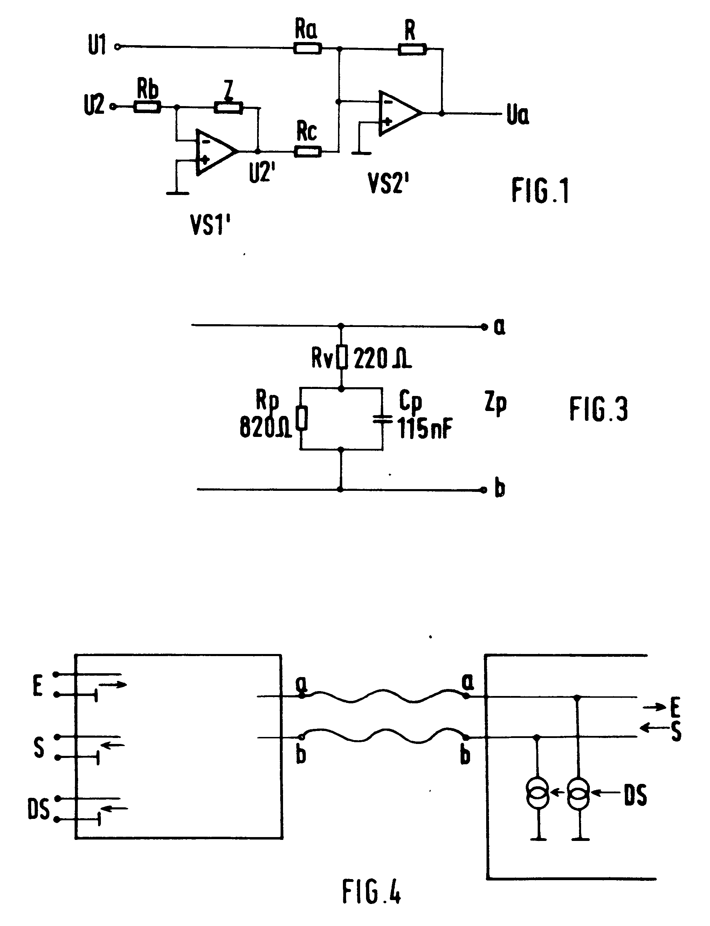

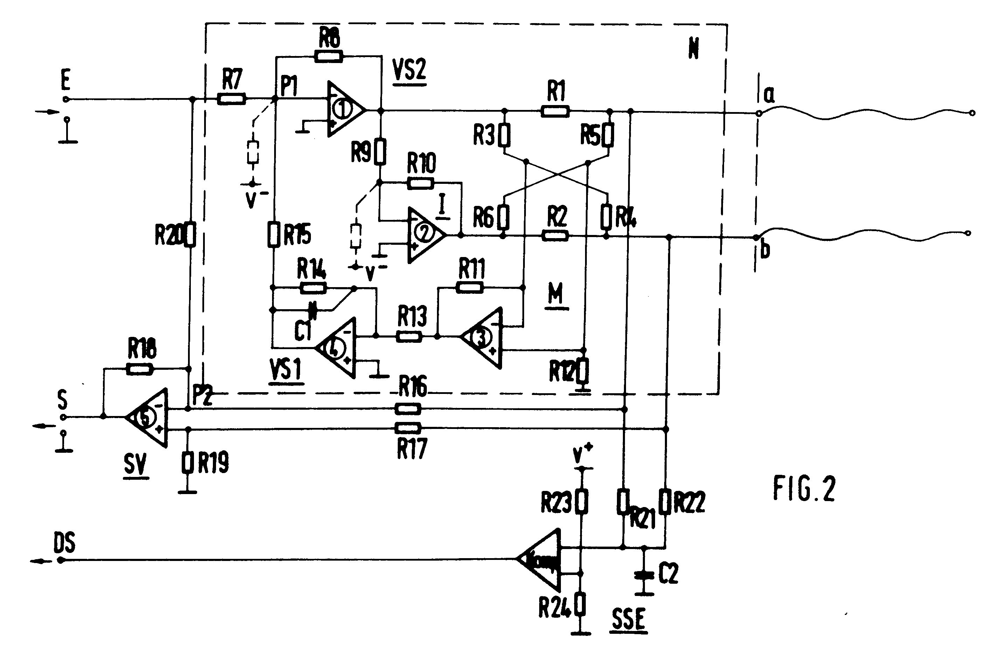

Der Summierverstärker nach Fig. 1 weist zwei Verstärkerstufen VS1′ und VS2′ auf. Die erste Verstärkerstufe VS1′ enthält einen Operationsverstärker, dessen nicht invertierender Eingang mit Masse verbunden ist und dessen invertierender Eingang einerseits über einen Vorwiderstand Rb mit einer Spannung U2 und andererseits über eine Impedanz Z mit dessen Ausgang verbunden ist. Die Spannung an diesem Ausgang ist dann

$$U2′ = U2\, Z/Rb.$$

Der Verstärkungsfaktor ist damit gleich einem reellen Vielfachen des komplexen Werts Z. Wird auch der Vorwiderstand Rb komplex ausgebildet, so ergibt sich ein weiterer Freiheitsgrad.

Die zweite Verstärkerstufe VS2′ enthält einen Operationsverstärker, dessen nicht invertierender Eingang mit Masse verbunden ist und dessen invertierender Eingang über einen Vorwiderstand Ra mit einer Spannung U1, über einen Vorwiderstand Rc mit der Spannung U2′ und über einen Rückkopplungswiderstand R mit dessen Ausgang verbunden ist. Die Spannung an diesem Ausgang ist dann

$$Ua = U2\, Z\, R/(Rc\, Rb) + U1\, R/Ra.$$

Die in Fig. 2 gezeigte Schnittstellenschaltung dient der Verbindung einer unidirektional betriebenen Empfangsleitung E und einer unidirektional betriebenen Sendeleitung S einerseits mit einer bidirektional betriebenen Zweidrahtleitung a, b andererseits.

Die Zweidrahtleitung a, b ist mit einer Nachbildung N abgeschlossen. Das von der Empfangsleitung E kommende Signal wird über einen in der Nachbildung N enthaltenen Summierverstärker, Verstärkerstufe zwei, VS2, in die Nachbildung eingespeist und gelangt so zur Zweidrahtleitung a, b. Zur Sendeleitung S hin weist die Schnittstelle einen Sendeverstärker SV auf, der einerseits die Spannung an der Zweidrahtleitung a, b in Differenzverstärkerschaltung auswertet und andererseits ein der Spannung an der Empfangsleitung E proportionales Signal phasenrichtig hinzuaddiert, um den Anteil der Spannung an der Zweidrahtleitung a, b auszugleichen, der von der Empfangsleitung E kommt. Weiter ist ein Steuersignalempfänger SSE vorhanden, der das Mittenpotential auf der Zweidrahtleitung a, b abgreift und mit einem vorgegebenen Schwellwert in Schmitt-Trigger-Schaltung vergleicht, um so aus einem an der Zweidrahtleitung a, b anliegenden Gleichtaktsignal ein Digitalsignal DS abzuleiten. Prinzipiell könnte anstelle eines Digitalsignals auch ein Analogsignal als Gleichtaktsignal übertragen werden. Voraussetzung dafür wären vernachlässigbare Gleichtaktstörsignale und eine Ausbildung des Steuersignalempfängers SSE in Verstärker- und nicht in Schmitt-Trigger-Schaltung. In jedem Fall ist zu berücksichtigen, daß die Zweidrahtleitung a, b für Gleichtaktsignale nicht wellenwiderstandsrichtig, sondern reell abgeschlossen ist.

Die Schnittstelle ist in der Regel Bestandteil einer Teilnehmeranschlußschaltung. Die übrigen Funktionen sind hier nicht dargestellt.

Die nachzubildende Impedanz ist in Fig. 3 dargestellt. Sie besteht aus der Reihenschaltung eines ohmschen Widerstands Rv mit einer komplexen Teilimpedanz Zp, die hier aus der Parallelschaltung eines ohmschen Widerstands Rp und einer Kapazität Cp besteht.

Diese Impedanz wird nun durch die Nachbildung N gemäß Fig. 2 realisiert. Die gezeigte Ausführungsform ist erdsymmetrisch und weist die Möglichkeit auf, das Signal von der Empfangsleitung ohne die Notwendigkeit einer Frequenzgangkompensation einzuspeisen. Eine andere Art der Einspeisung dieses Signals ist die der Stromeinspeisung, beispielsweise zusammen mit dem Fernspeisestrom, direkt in die Zweidrahtleitung a, b. Ein Beispiel einer Stromeinspeisung ist in der DE-OS 34 28 106 gezeigt (1 in Fig. 3).

Die Nachbildung N nach Fig. 2 enthält eine Meßanordnung M, einen zweistufigen Verstärker mit einer Verstärkerstufe eins, VS1, und der bereits erwähnten Verstärkerstufe zwei, VS2, und einen Inverter I.

Die Meßanordnung M enthält zunächst zwei Meßwiderstände R1 und R2, die gleichzeitig die gleichstrommäßigen Abschlußwiderstände der Zweidrahtleitung sind. Falls hierfür ein bestimmter Wert vorgegeben oder sonst von Vorteil ist, kann dieser hier direkt verwendet werden. Andernfalls ist die Bemessung R1 = R2 = Rv/2 vorteilhaft. Da der Verstärkungsfaktor der Meßanordnung M und des nachfolgenden Verstärkers beliebig wählbar ist, können die Meßwiderstände aber beliebig, wegen der Symmetrie aber untereinander gleich, gewählt werden. Sie dürfen aber nicht größer als Rv/2 sein. Da im vorliegenden Fall von überlagerten Gleichtaktströmen ausgegangen wird, wird in einer Brückenschaltung, bestehend aus den Widerständen R3, ..., R6 eine den Gleichtaktanteil nicht enthaltende Spannung abgegriffen.

Der, hier zweistufige, Verstärker verstärkt nun das Ausgangssignal der Meßanordnung M derart, daß sich seine Ausgangsspannung zum Ausgangsstrom wie die komplexe Teilimpedanz verhält. Sein Verstärkungsfaktor muß also gleich einem reellen Vielfachen dieser Teilimpedanz sein. Der Verstärkungsfaktor eines rückgekoppelten Operationsverstärkers ist proportional zu seinem Rückkopplungswiderstand (R8 im Falle VS2) und umgekehrt proportional zu seinem Vorwiderstand (R15 im Falle VS2). Ein Verstärker, in dessen Rückkopplungszweig die vorgegebene Teilimpedanz Zp liegt und dessen Vorwiderstand reell ist, hat deshalb den geforderten Verstärkungsfaktor. Eine gleichartige Impedanz, deren Bauelemente im selben Verhältnis zueinander stehen wie bei der Teilimpedanz Zp, hat dieselbe Wirkung, wenn der Vorwiderstand entsprechend mit verändert wird. Auch eine Verstärkungsstufe mit reellem Verstärkungsfaktor, wie hier die zweite Verstärkerstufe, VS2, ändert am prinzipiellen Verhalten nichts.

Die Zweiteilung des Verstärkers mit einer reell verstärkenden zweiten Stufe hat den Vorteil, daß hier problemlos ein weiteres Signal, hier das Signal von der Empfangsleitung E, hinzusummiert werden kann. Falls dies nicht erforderlich ist, wenn beispielsweise dieses Signal wie oben erwähnt direkt in die Zweidrahtleitung eingespeist wird, genügt ein einstufiger Verstärker.

Ein einstufiger Verstärker kann zwar auch als Summierverstärker verwendet werden. Dann muß aber entweder der Vorwiderstand, mit dem das Signal von der Eingangsleitung hinzusummiert wird, die gleiche komplexe Struktur aufweisen wie der Rückkopplungswiderstand, oder es muß derjenige Vorwiderstand (hier R15), mit dem das Signal der Meßanordnung M hinzuaddiert wird, in einer Weise ausgebildet sein, daß sein komplexer Widerstand umgekehrt proportional zur Teilimpedanz Zp ist.

Durch den Inverter I wird, zusammen mit dem zweiten Meßwiderstand R2, die Schaltung symmetrisch gegenüber Erde. Beides kann weggelassen werden, wenn die Symmetrie nicht gefordert ist.

Das Potential beider Adern der Zweidrahtleitung a, b kann gegenüber Erde angehoben oder abgesenkt werden, indem an den einander entsprechenden Eingängen der zweiten Verstärkerstufe VS2 und des Inverters I jeweils eine Gleichspannung über einen zusätzlichen Vorwiderstand hinzusummiert wird. In Fig. 2 ist dies gestrichelt dargestellt.

Ein bevorzugter Anwendungsfall ist in Fig. 4 dargestellt. Links ist sehr schematisch die Schnittstelle mit der darin enthaltenen Nachbildung und rechts, über die Zweidrahtleitung damit verbunden, ein Fernsprechendgerät dargestellt. Das Fernsprechendgerät ist dabei nur insoweit dargestellt, wie die Erzeugung des Steuersignals, Digitalsignals DS, betroffen ist. Beide Adern a und b der Zweidrahtleitung sind über je eine gesteuerte Stromquelle mit Erde verbunden. Die Steuerung der Stromquelle erfolgt durch das Digitalsignal DS.

**Patentansprüche**

1. Summierverstärker mit einem Operationsverstärker (VS2'), mit einem Rückkopplungswiderstand (R) zwischen dem Ausgang und dem invertierenden Eingang des Operationsverstärkers und mit je einem Vorwiderstand (Ra, Rc) zwischen dem invertierenden Eingang und einem Schaltungspunkt, dessen Signalspannung (U1, U2') im Summierverstärker zu summieren ist, **dadurch gekennzeichnet**, daß, um eine Signalspannung (U2) mit einem komplexen Gewichtungsfaktor hinzusummieren zu können, dem dieser Signalspannung zugeordneten Vorwiderstand (Rc) ein weiterer als Umkehrverstärker beschalteter Operationsverstärker (VS1') mit einem weiteren Vorwiderstand (Rb) vorgeschaltet ist, dessen Rückkopplungswiderstand (Z) derart komplex ausgebildet ist, daß sich zusammen mit den in die Gewichtung dieser Signalspannung (U2) eingehenden übrigen, reellen Widerständen (Rb, Rc, R) der geforderte komplexe Gewichtungsfaktor ergibt.

2. Schnittstelle zwischen einer bidirektional betriebenen Zweidrahtleitung (a, b) einerseits, insbesondere einer Fernsprechteilnehmerleitung, und einer unidirektional betriebenen Empfangsleitung (E) und einer unidirektional betriebenen Sendeleitung (S) andererseits, mit einem ersten Zweig von der Empfangsleitung zur Zweidrahtleitung, mit einem zweiten Zweig von der Zweidrahtleitung zur Sendeleitung, mit einem dritten Zweig von der Empfangsleitung zur Sendeleitung und mit einer die Zweidrahtleitung abschließenden Nachbildung (N) einer komplexen Impedanz, die aus der Reihenschaltung eines ohmschen Widerstands (Rv) mit einer komplexen Teilimpedanz (Zp) besteht, bei der die Nachbildung einen Verstärker (VS1, VS2) enthält, dessen Verstärkungsfaktor gleich einem reellen Vielfachen der komplexen Teilimpedanz ist, bei der die von diesem Verstärker zu verstärkende Spannung gleich der Ausgangsspannung einer Meßanordnung (M) ist, die den Strom in einem ohmschen Meßwiderstand (R1, R2) mißt, bei der der Meßwiderstand vom Ausgangsstrom des Verstärkers durchflossen wird, wobei dieser Strom der durch die Nachbildung fließende Strom ist, und bei der der Verstärker zweistufig aufgebaut ist und einen Operationsverstärker (VS2) enthält, mit einem Rückkopplungswiderstand (R8) zwischen dem Ausgang und dem invertierenden Eingang des Operationsverstärkers, mit einem Vorwiderstand (R7) zwischen dem invertierenden Eingang und der Empfangsleitung, einem weiteren Vorwiderstand (R15) zwischen dem invertierenden Eingang und einem weiteren als Umkehrverstärker beschalteten Operationsverstärker (VS1), dessen invertierender Eingang über einen weiteren Vorwiderstand (R13) mit der Meßanordnung (M) verbunden ist, dessen Rückkopplungswiderstand (R14, C1) derart komplex ausgebildet ist, daß sich zusammen mit den in die Gewichtung eingehenden übrigen, reellen Widerständen (R8, R13, R15) der geforderte komplexe Gewichtungsfaktor ergibt.

3. Schnittstelle nach Anspruch 2, dadurch gekennzeichnet, daß ein Inverter (I) vorhanden ist, der die Ausgangsspannung des Verstärkers (VS2) invertiert, daß ein Widerstand (R2) vorhanden ist, der gleich groß ist wie der Meßwiderstand (R1), daß dieser Widerstand (R2) vom Ausgangsstrom des Inverters (I) durchflossen ist und daß der Ausgangsstrom des Inverters ebenso wie der Ausgangsstrom des Verstärkers der durch die Nachbildung fließende Strom ist.

4. Schnittstelle nach Anspruch 3, dadurch gekennzeichnet, daß die zweite Stufe des Verstärkers (VS2) und der Inverter (I) ein gemeinsames, auf Erde bezogenes Bezugspotential aufweisen und daß ein Empfänger (SSE) für Gleichtaktsignale vorhanden ist, der erdunsymmetrische Signale auf der Zweidrahtleitung (a, b) auszuwerten vermag.

5. Schnittstelle nach Anspruch 4, dadurch gekennzeichnet, daß das auf Erde bezogene Bezugspotential von Null verschieden und größer als üblicherweise auftretende Gleichtaktstörsignale ist und daß der Empfänger (SSE) für Gleichtaktsignale digital auf solche Gleichtaktsignale anspricht, die über dem genannten Bezugspotential liegen.

## Claims

1. A summing amplifier comprising an operational amplifier (VS2'), a feedback resistor (R) between the output and the inverting input of the operational amplifier, and respective dropping resistors (Ra, Rc) between the inverting input and each of two circuit points whose signal voltages (U1, U2') are to be summed in the summing amplifier, **characterized** in that, in order to be able to add a signal voltage (U2) with a complex weighting factor, the dropping resistor (Rc) assigned to said signal voltage is preceded by a further operational amplifier (VS1') connected as an inverting amplifier and having a further dropping resistor (Rb) whose feedback impedance (Z) is of such a complex design that, together with the ohmic resistances (Rb, Rc, R) entering into the weighting of said signal voltage (U2), the required complex weighting factor is obtained.

2. An interface between a bidirectionally operated two-wire line (a, b), particularly a telephone subscriber line, on the one hand, and a unidirectionally operated receive line (E) and a unidirectionally operated transmit line (S), on the other hand, comprising a first branch from the receive line to the two-wire line, a second branch from the two-wire line to the transmit line, a third branch from the receive line to the transmit line, and a network (N) terminating the two-wire line and simulating a complex impedance consisting of a resistor (Rv) in series with a complex partial impedance (Zp), the impedance-simulating network including an amplifier (VS1, VS2) whose gain is equal to a real multiple of the complex partial impedance, wherein the voltage to be amplified by said amplifier is equal to the output voltage of a measuring arrangement (M) which measures the current in a current-sensing resistor (R1, R2), wherein said current-sensing resistor is traversed by the output current of the amplifier, said current being the current flowing through the impedance-simulating network, and wherein the amplifier is a two-stage amplifier and contains an operational amplifier (VS2), a feedback resistor (R8) between the output and the inverting input of the operational amplifier, a dropping resistor (R7) between the inverting input and the receive line, and a further dropping resistor (R15) between the inverting input and a further operational amplifier (VS1) connected as an inverting amplifier and having its inverting input connected via a further dropping resistor (R13) to the measuring arrangement (M) and having a feedback impedance (R14, C1) of such a complex design that, together with the ohmic resistances (R8, R13, R15) entering into the weighting, the required complex weighting factor is obtained.

3. An interface as claimed in claim 2, characterized in that an inverter (I) is provided which inverts the output voltage of the amplifier (VS2), that a resistor (R2) is provided which has the same value as the current-sensing resistor (R1), that said resistor (R2) is traversed by the output current of the inverter (I), and that the output current of the inverter, like the output current of the amplifier, is the current flowing through the impedance-simulating network.

4. An interface as claimed in claim 3, characterized in that the second stage (VS2) of the amplifier and the inverter (I) are at a common reference potential with respect to ground, and that a common-mode-signal receiver (SSE) is provided which is capable of evaluating signals on the two-wire line (a, b) which are not balanced to ground.

5. An interface as claimed in claim 4, characterized in that the reference potential with respect to ground is different from zero and greater than commonly occurring common-mode interference signals, and that the common-mode-signal receiver (SSE) responds digitally to those common-mode signals which exceed said reference potential.

**Revendications**

1. Amplificateur de sommation comportant un amplificateur opérationnel (VS2′), avec une résistance de rétrocouplage (R) entre la sortie et l'entrée de changement de signe de l'amplificateur opérationnel et avec, chaque fois, une prérésistance (Ra, Rc) entre l'entrée de changement de signe et un point du circuit dont la tension du signal (U1, U2′) est à additionner dans l'amplificateur de sommation, caractérisé par le fait que pour pouvoir additionner une tension de signal (U2) avec un facteur de pondération complexe, en amont de la prérésistance (Rc) correspondant à cette tension du signal, est monté, avec une autre prérésistance (Rb), un autre amplificateur opérationnel (VS1′) relié en amplificateur inverseur dont la résistance de rétrocouplage (Z) présente une forme complexe telle qu'avec les autres résistances, réelles (Rb, Rc, R) intervenant dans la pondération de cette tension du signal (U2), on obtient le facteur de pondération complexe demandé.

2. Interface entre une ligne deux fils (a, b), exploitée en bidirectionnel, d'une part, en particulier d'une ligne d'abonné au téléphone, et une ligne de réception (E), exploitée en unidirectionnel, et une ligne d'émission (S), exploitée en unidirectionnel, d'autre part, comportant une première branche allant de la ligne de réception à la ligne deux fils, une seconde branche allant de la ligne deux fils à la ligne d'émission, une troisième branche allant de la ligne de réception à la ligne d'émission, et un circuit de simulation (N), terminant la ligne deux fils, d'une impédance complexe qui est constituée du circuit de série d'une résistance ohmique (Rv) avec une impédance partielle complexe (Zp), dans le cas de laquelle le circuit de simulation contient un amplificateur (VS1, VS2) dont le facteur d'amplification est égal à un multiple réel de l'impédance partielle complexe, dans le cas de laquelle la tension à amplifier par cet amplificateur est égale à la tension de sortie d'un dispositif de mesure (M), qui mesure le courant dans une résistance de mesure ohmique (R1, R2), dans le cas de laquelle la résistance de mesure est parcourue par le courant de sortie de l'amplificateur, ce courant étant le courant qui passe à travers le circuit de simulation, et dans le cas de laquelle l'amplificateur est prévu en deux étages et contient un amplificateur opérationnel (VS2) avec une résistance de rétrocouplage (R8) entre la sortie et l'entrée de changement de signe de l'amplificateur opérationnel, avec une prérésistance (R7) entre l'entrée de changement de signe et la ligne de réception, une autre prérésistance (R15) entre l'entrée de changement de signe et un autre amplificateur opérationnel relié en amplificateur inverseur (VS1) dont l'entrée de changement de signe est reliée avec le dispositif de mesure (M) par l'intermédiaire d'une autre prérésistance (R13) et dont la résistance de rétrocouplage (R14, C1) est conçue de forme complexe de façon qu'avec les autres résistances réelles (R8, R13, R15) intervenant dans la pondération on obtienne le facteur de pondération complexe demandé.

3. Interface selon la revendication 2, caractérisée par le fait qu'il existe un inverseur (1) qui inverse la tension de sortie de l'amplificateur (VS2), qu'il existe une résistance (R2) qui est identique à la résistance de mesure (R1), que cette résistance (R2) est parcourue par le courant de sortie de l'inverseur (I) et que le courant de sortie de l'inverseur, de même que le courant de sortie de l'amplificateur, est le courant qui passe à travers le circuit de simulation.

4. Interface selon la revendication 3, caractérisé par le fait que le second étage de l'amplificateur (VS2) et l'inverseur (1) présentent un potentiel, rapporté à la terre, commun et qu'il existe un récepteur (SSE) pour des signaux en mode commun qui peut traiter des signaux non symétriques par rapport à la terre sur la ligne deux fils (a, b).

5. Interface selon la revendication 4, caractérisée par le fait que le potentiel de référence, rapporté à la terre, est différent de zéro et supérieur aux signaux parasites en mode commun survenant habituellement et que, pour les signaux en mode commun, le récepteur (SSE) réagit numériquement aux signaux en mode commun qui se situent au-dessus du potentiel de référence mentionné.

FIG.1

FIG.3

FIG.4

FIG.2

EP 0 436 808 B1